Europäisches Patentamt

European Patent Office

Office européen des brevets

(11) Numéro de publication: **0 235 022**
**B1**

(12) # FASCICULE DE BREVET EUROPEEN

(45) Date de publication du fascicule du brevet:
07.11.90

(51) Int. Cl.⁵: **G06K 7/06**, G06K 13/08

(21) Numéro de dépôt: **87400294.2**

(22) Date de dépôt: **09.02.87**

(54) Dispositif de connexion avec une carte à microcircuits, et machine comportant un tel dispositif.

(30) Priorité: **10.02.86 FR 8601794**
**15.09.86 FR 8612870**

(43) Date de publication de la demande:
**02.09.87 Bulletin 87/36**

(45) Mention de la délivrance du brevet:
**07.11.90 Bulletin 90/45**

(84) Etats contractants désignés:
**BE CH DE IT LI LU NL SE**

(56) Documents cités:
**EP-A- 0 139 593**
**WO-A-79/00543**
**FR-A- 1 536 739**
**FR-A- 2 295 503**
**FR-A- 2 477 303**
**FR-A- 2 489 558**
**FR-A- 2 552 252**
**US-A- 3 042 299**
**US-A- 3 404 882**

(73) Titulaire: **ELECTRONIQUE SERGE DASSAULT, 5, avenue Ingres, F-75016 PARIS(FR)**

(72) Inventeur: **Dugachard, Lucien, 10, rue Chaptal, F-94230 Cachan(FR)**
Inventeur: **Dhiver, Claude, 5, allée du Parc de la Bièvre, F-94240 L'Hay-Les-Roses(FR)**

(74) Mandataire: **Plaçais, Jean-Yves et al, Cabinet Netter, 40, rue Vignon, F-75009 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne la connexion avec une carte à micro-circuits.

On sait le développement actuel des cartes à micro-circuits électroniques, également appelées cartes à puces, ou encore cartes à mémoire.

Certaines applications utilisent des cartes dont la mémoire est uniquement constituée de micro-circuits. D'autres, comme les applications bancaires, utilisent pour des raisons de compatibilité des cartes mixtes, c'est-à-dire pourvues à la fois de micro-circuits, et de pistes magnétiques conformes aux normes actuelles.

Différentes solutions ont été proposées pour réaliser la connexion avec la carte à micro-circuits. Un lecteur de carte mixte, où la carte est déplacée manuellement, a notamment été décrit par la Demanderesse dans la Demande de Brevet française N° 83 15 042, publiée sous le N° FR-A 2 552 252.

D'une manière générale, un dispositif de connexion connu avec une carte à micro-circuits comporte :
- un chemin d'amenée de la carte,
- des moyens formant réceptacle pour recevoir la carte en position prédéterminée, et
- un connecteur multiple, propre à venir en contact sur les plots de connexion de la carte, lorsqu'elle est dans sa position prédéterminée.

La Demanderesse s'est posé le problème de réaliser un dispositif de connexion qui soit, aussi largement que possible, compatible avec les différentes machines de traitement de cartes à micro-circuits, ou de cartes mixtes à micro-circuits et à piste magnétique. On comprendra que de telles machines doivent pouvoir réaliser, après connexion, la lecture et/ou l'écriture dans le micro-circuit de la carte.

Dans le cas d'une carte mixte, ces opérations seront précédées ou suivies de la lecture/écriture sur des pistes magnétiques de la carte, voire de la reconnaissance de formes spéciales, par exemple holographiques, imprimées sur la carte, ou contenues dans le matériau même de la carte.

Ainsi, un premier but de la présente invention est de fournir un dispositif de connexion qui puisse être associé à tout autre dispositif de traitement de carte, avec un encombrement minimal, tout en permettant un débattement important de l'extrémité de la carte en dehors du dispositif de traitement auquel est associé le dispositif de connexion selon l'invention.

Un autre but de l'invention est de permettre d'une manière simple la capture et le stockage d'une carte reconnue non conforme, ou oubliée, par exemple.

L'invention a aussi pour but de permettre un contact entre le connecteur et les plots de la carte à micro-circuits, en assurant une friction au moment de la mise en contact, tout en évitant que cette friction ne gêne l'introduction de la carte en position prédéterminée dans le réceptacle.

L'invention a encore pour but de réaliser ces fonctions à l'aide d'une cinématique très simple, et d'une grande sûreté.

Selon l'invention, le réceptacle, monté pivotant, est normalement maintenu dans une position de repos, où son ouverture est non alignée sur la sortie du chemin d'amenée de la carte, de préférence situé au-dessus de la sortie du chemin d'amenée; et il est prévu un organe moteur, propre, sur commande, à placer ce réceptacle en regard de la sortie du chemin d'amenée.

Ceci permet d'une part, après contrôle, la capture et le stockage d'une carte reconnue non conforme. Le contrôle peut se faire par la connexion au micro-circuit de la carte, ou lors de phases antérieures intéressant les pistes magnétiques de la carte, ou encore ses formes holographiques. Seront également capturées les cartes oubliées dans la machine. Ceci permet aussi un débattement important de l'extrémité de la carte, en dehors du chemin d'amenée, sans interférence avec le dispositif de connexion, lorsque le réceptacle de celui-ci est dans sa position de repos.

Selon une caractéristique préférée de l'invention, le connecteur, monté sur un support mobile à pivotement, vient en contact sur la carte après son introduction dans le réceptacle, à partir d'une position de repos sans contact avec la carte. De la sorte, l'introduction de la carte dans le réceptacle se fait sans aucune friction sur le connecteur.

Selon une autre caractéristique préférée de l'invention, le dispositif comprend un moteur unique, tournant toujours dans le même sens, et animant par exemple deux cames. L'une de ces cames assure l'alignement commandé de l'ouverture du réceptacle sur la sortie du chemin d'amenée de carte; l'autre assure ensuite la descente du connecteur mobile sur les plots de la carte.

De préférence, le dispositif comporte également un codeur de position, muni d'un ou plusieurs capteurs pour définir logiquement la position du réceptacle et celle du connecteur, respectivement.

Dans un mode de réalisation particulier, le réceptacle définit intérieurement un alvéole rectangulaire possédant latéralement un bord de référence faisant face à un rappel élastique de cadrage, et, à l'opposé de son ouverture, un détecteur de butée de la carte.

Le détecteur de butée peut comprendre une cellule photo-électrique, ou encore un micro-interrupteur.

La position de repos du réceptacle, et aussi celle du connecteur multiple, sont avantageusement définies par rappel élastique.

Selon une variante très avantageuse de l'invention, le support du connecteur est solidaire du réceptacle et monté à pivotement sur un même axe que celui du réceptacle.

De préférence, le support du connecteur est disposé sur la paroi supérieure du réceptacle et comprend une fenêtre dans laquelle est fixé le connecteur qui vient en contact sur la carte située dans le réceptacle lors du pivotement du support du connecteur.

Selon une autre caractéristique préférée de la variante de l'invention, les positions de repos du réceptacle et du support du connecteur sont définies par rappel élastique, la raideur du dispositif de rappel du support du connecteur étant supérieure à celle du dispositif de rappel du réceptacle.

Selon une troisième caractéristique préférée de la variante de l'invention, le moteur unique commandant à la fois le réceptacle et le connecteur anime une came unique, telle qu'un simple excentrique qui assure :

- d'une part l'alignement commandé de l'ouverture du réceptacle sur la sortie du chemin d'amenée des cartes, par appui sur un galet monté à pivotement sur le support du connecteur solidaire du réceptacle, jusqu'à ce que le réceptacle vienne en butée sur le châssis du dispositif;
- d'autre part assure ensuite la descente du connecteur mobile sur les plots de la carte;
l'ordre de ces opérations étant assuré par la différence de raideurs des dispositifs de rappel respectifs du réceptacle et du support du connecteur.

Il s'est avéré très avantageux que le support du connecteur comprenne, sur la partie interne du côté de l'alvéole du réceptacle, une saillie oblique ou conique qui, lors du déplacement relatif du support de connecteur vers la carte, entraîne un déplacement relatif de la carte vers l'extérieur par frottement de la saillie contre le bord de la carte situé au fond de l'alvéole.

Le déplacement en rotation du connecteur amène également avantageusement ce dernier avec friction sur les plots de la carte.

Dans un mode de réalisation particulier, le déplacement relatif des plots de la carte et du connecteur entraînant une friction sur les plots et un meilleur contact, provient de manière sensiblement égale du déplacement relatif de la carte provoqué par la saillie conique et du déplacement en rotation du connecteur.

De préférence, le moteur anime la came par une roue à pignon située sur le même axe que la came qui coopère avec le galet du support du connecteur, à l'extérieur du châssis du dispositif.

Le support du connecteur est avantageusement bloqué dans sa position de repos par une butée fixée sur la paroi supérieure du réceptacle.

Le réceptacle comprend de préférence, sur au moins l'une de ses parois latérales, une saillie qui peut se déplacer à l'intérieur d'une fenêtre percée dans ladite paroi latérale, cette dernière servant de butée aux déplacements ascendants ou descendants du réceptacle et définissant le champ de déplacement du réceptacle.

L'invention concerne aussi les machines de traitement de cartes à micro-circuits, en particulier les machines de lecture des cartes bancaires, qui comprennent un dispositif tel que défini ci-dessus.

Du document FR-A 2 489 558 est connu un dispositif de connexion ayant un réceptacle de carte pivotable mais dans ce dispositif connu l'ouverture du réceptacle est alignée en état de repos de manière que l'on puisse commencer à faire entrer une carte. Pour cette raison il est nécessaire de pourvoir le réceptacle dans ce dispositif connu d'un obturateur mobile.

D'autres caractéristiques et avantages de l'invention apparaîtront à l'examen de la description détaillée ci-après, et des dessins annexés, sur lesquels :

- la figure 1 est une vue schématique en perspective d'un dispositif de connexion selon l'invention;
- la figure 2 est une vue de dessus du dispositif de la figure 1, à l'échelle 1;
- les figures 3A, 3B, 3C sont trois vues correspondantes d'un connecteur mobile utilisé selon l'invention, respectivement en vue latérale, en vue de dessous et en vue de côté;
- les figures 4A à 4C sont trois schémas simplifiés du dispositif selon l'invention, en vue latérale, permettant d'en mieux comprendre le fonctionnement;
- la figure 5 est une vue schématique en perspective d'un dispositif de connexion selon la variante de l'invention;
- la figure 6 est une vue en coupe selon la ligne A-A du dispositif de connexion selon la variante de l'invention représenté en figure 7;
- la figure 7 est une vue de dessus du dispositif de la figure 5;
- les figures 8A à 8C sont trois schémas simplifiés du dispositif selon la variante de l'invention, en vue latérale, permettant de mieux comprendre le fonctionnement du dispositif; et
- la figure 9 est un schéma de principe d'une machine comprenant un dispositif selon l'invention ou selon la variante de l'invention.

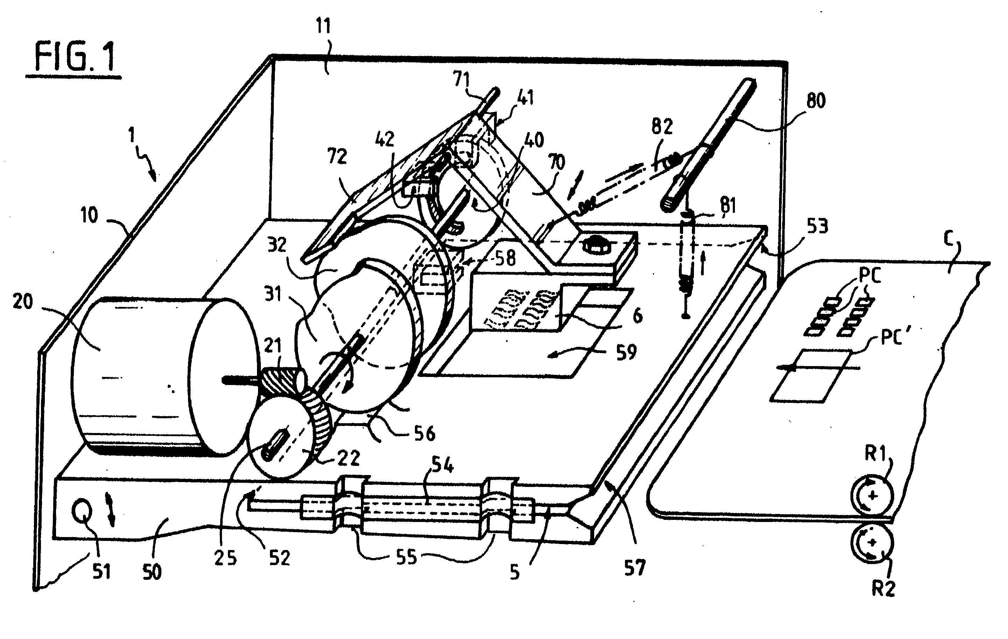

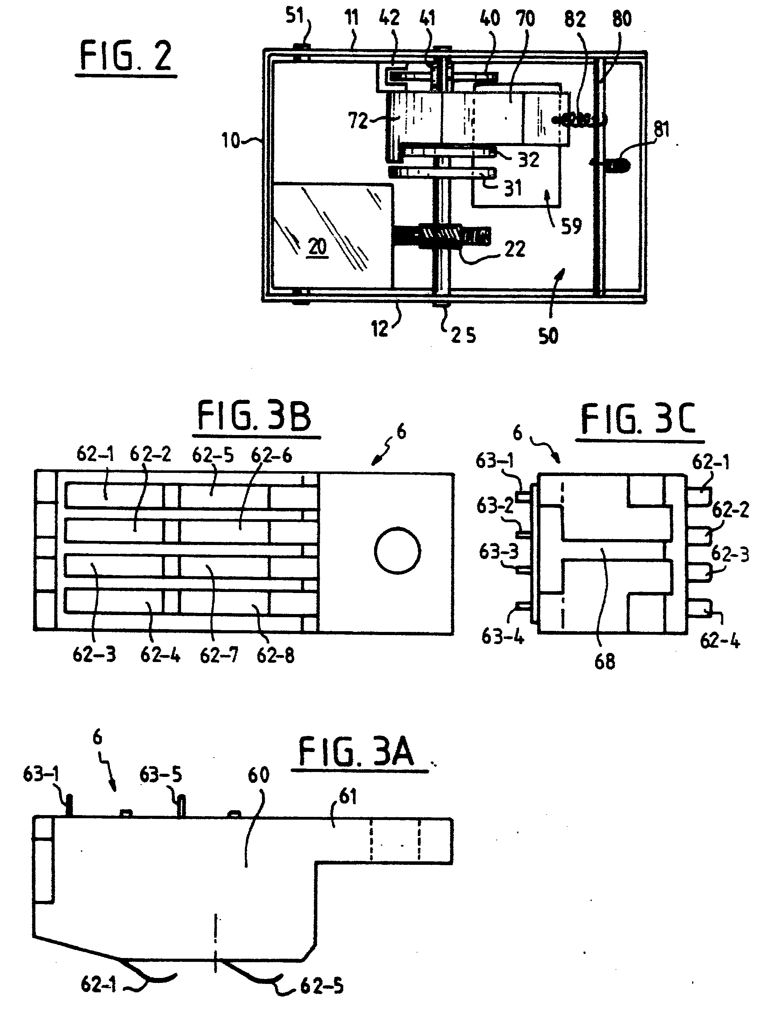

Sur la figure 1, le dispositif de connexion selon l'invention est logé dans un châssis 1 dont on voit ici la paroi de fond 10 et la paroi latérale 11, tandis que l'autre paroi latérale opposée apparaît en 12 sur la figure 2.

Sur la paroi 10 est monté un moteur 20, à courant continu, alimenté par exemple sous 24 volts. Ce moteur entraîne une vis sans fin 21 qui coopère avec une roue dentée 22 montée sur un arbre 25 soutenu par les parois 11 et 12.

Cet axe 25 reçoit fixement deux cames 31 et 32, ainsi qu'une roue 40 formant codeur angulaire à au moins deux positions, à l'aide de deux détecteurs 41 et 42 du genre cellule photo-électrique, coopérant avec des perforations ou autres marquages du disque 40.

3

Un réceptacle 5 est défini par un alvéole ménagé dans un plateau 50, mobile à pivotement autour d'un axe 51, parallèle à l'axe 25, et situé de préférence au voisinage de la paroi d'extrémité 10.

La came 31 est palpée par un bossage supérieur 56 du plateau 50, le contact étant assuré par un rappel élastique vers le haut que définit un ressort 81 monté entre le dessus du plateau 50 et une tige 80 prenant appui entre les parois 11 et 12.

L'alvéole qui va servir à la réception d'une carte telle que C comporte un bord de référence 53, et, à l'opposé, une lame 54 montée latéralement sur le plateau 50 pour rappeler élastiquement la carte vers le bord 53, à travers deux fentes 55, par exemple.

Le bord interne rectiligne de l'alvéole, noté 52, est équipé en une position choisie d'un détecteur 58 de présence d'une carte dans l'alvéole. Ce détecteur 58 peut être constitué d'une cellule photo-électrique ou bien d'un micro-interrupteur.

La carte C, munie de plots de connexion PC, peut être amenée manuellement selon un chemin d'amenée défini par tout moyen. En principe, elle est amenée automatiquement, à l'aide de rouleaux motorisés schématisés en R1 et R2. La position des plots PC est ici la position standard pour les cartes à micro-circuit françaises. Certaines cartes sont équipées de plots en une position un peu différente, schématisée en PC′ sur la figure 1.

La paroi supérieure du plateau 50 est percée d'un alvéole 59 qui est de préférence rendu suffisamment grand pour permettre de lire aussi bien la zone PC que la zone PC′ de la carte, par une simple translation d'un bloc connecteur 6, manuelle ou motorisée.

Ce bloc connecteur 6 est porté par un levier 70, articulé sur un axe 71 monté entre les parois 11 et 12. Le levier 70 est complété d'une partie en L 72, qui redescend d'abord obliquement, puis à l'horizontale pour venir palper la came 32. Le contact du bras 72 avec la came 32 est assuré par un rappel élastique vers le haut qu'exerce le ressort 82 sur le levier 70, en prenant appui sur la tige 80 déjà citée.

La figure 2 en vue de dessus complète la représentation du dispositif selon l'invention, remarque étant faite que l'axe 71 n'apparaît pas sur cette figure 2.

L'homme de l'art comprendra que les parties latérales 11 et 12 du dispositif de connexion peuvent recevoir toute forme appropriée permettant l'accouplement de ce dispositif à un lecteur de cartes à pistes magnétiques du commerce, et en particulier aux modèles MCT 245 et MCT 345 fabriqués par la société japonaise SANKYO, au modèle CR 51 vendu par la Demanderesse, et au modèle ESD dit multistandard ou MS, également vendu par la Demanderesse. Les rouleaux R1 et R2 sont alors les galets de sortie d'un tel lecteur de cartes à pistes magnétiques.

Les figures 3A, 3B et 3C illustrent la structure du connecteur 6 proprement dit. Celui-ci comporte un corps en matière synthétique 60, muni d'un épaulement de fixation 61. Le corps 60 supporte en partie inférieure huit contacts $62_1$, $62_2$, ..., $62_8$ se terminant à leurs extrémités comme des balais. A l'opposé, c'est-à-dire vers le haut, sont prévus huit points de connexion correspondants 63. Par ailleurs, sur sa face opposée à l'épaulement 61, le bloc connecteur multiple 6 peut être muni d'une rainure 68, en forme de T qui peut faciliter son positionnement.

Sur la figure 1, le bloc est supposé monté dans le sens illustré sur la figure 3A, c'est-à-dire que les pointes libres des contacts 62 sont tournés vers la droite lorsqu'on regarde la figure 1.

Le fonctionnement du dispositif est le suivant :

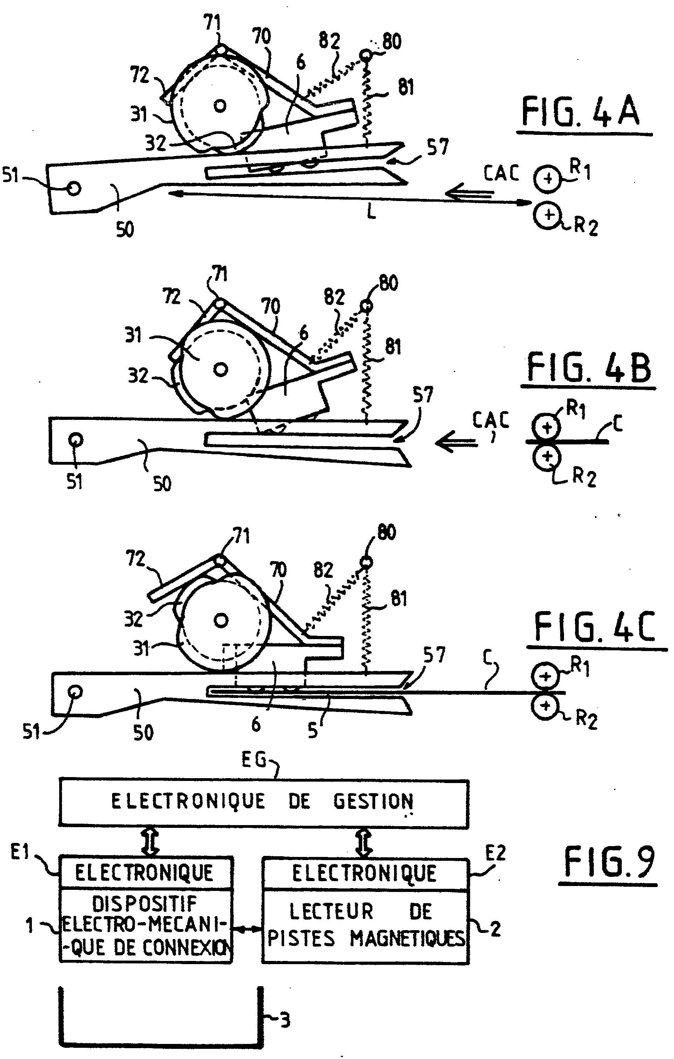

Pour une première position des deux cames (figure 4A), l'ouverture 57 du réceptacle 5 est située plus haut que le chemin d'amenée de carte CAC. On dispose alors de toute la longueur L pour permettre le débattement de la carte, lorsqu'elle est lue par le lecteur de piste magnétique, ce qui est très important dans certaines applications. De plus, une carte peut ainsi être mise directement au rebut, ou sous séquestre, dans un bac 3 (figure 9), où elle tombe par gravité. Il suffit pour cela qu'elle soit lâchée par les rouleaux R1 et R2, le dispositif de connexion étant dans sa position de repos de la figure 4A.

Lorsque le dispositif de connexion est activé, la première phase consiste en la descente du plateau 50, de façon que son ouverture 57 vienne en regard du chemin d'amenée de carte CAC. La carte peut alors être introduite sous l'action des rouleaux moteurs R1 et R2 (ou même à la main). On notera que dans cette position, le connecteur ne vient pas en prise sur les plots de la carte, ce qui permet une introduction de la carte dans son réceptacle 5 avec des frictions minimales.

Sur la figure 4C, la carte est supposée complètement introduite dans le réceptacle, les contacts 62 du connecteur 6 sont alors venus s'établir sur les plots respectivement associés de la carte, par un mouvement de rotation qui implique une friction, propre à établir un excellent contact.

Il est alors possible de procéder à des tests sur la bonne qualité des contacts, notamment par contrôle de la conduction entre les bornes d'entrée actives de la carte et le substrat semi-conducteur des microcircuits que comporte celle-ci.

Ensuite, le moteur reste immobile pendant toute la durée des opérations de lecture/écriture dans les micro-circuits de la carte.

Après cela, le moteur est à nouveau mis en action, la came 32 va tout d'abord relever le connecteur 6, après quoi les rouleaux R1 et R2 vont retirer la carte. Enfin, la came 31 va relever le réceptacle 50 jusqu'à sa position de repos.

Le temps nécessaire à l'exécution d'un cyle complet, de la position de repos à la position de repos pour l'ensemble des composants du mécanisme, à savoir le réceptacle et le connecteur, peut être aisément rendu compris entre 1 et 4 secondes, sans consommation électrique excessive.

Par ailleurs, lorsque le dispositif connecteur est dans la position de connecteur relevé (après vérification des contacts ou bien lecture/écriture dans la carte), en attente de la relevée du réceptacle, on peut faire en sorte qu'il s'écoule un temps d'au moins 0,3 seconde entre la mise sous tension du moteur et le début du déplacement du réceptacle.

Par ailleurs, il est possible de rendre la longueur L (figure 4A) égale à 55 mm, au moins, ce qui est particulièrement important pour limiter l'encombrement total d'un lecteur de cartes mixtes.

Le capteur 58 indique que la carte est correctement positionnée pour permettre l'application du connecteur 6. Si cette condition n'est pas remplie, les rouleaux R1 et R2 sont actionnés pour retirer la carte, après quoi le moteur 20 est commandé dans une phase de retour rapide à la position de repos. Une variante consiste à faire une tentative de réinsertion immédiate de la carte.

Les deux autres capteurs 41 et 42 indiquent respectivement la position du réceptacle 5 et celle du connecteur multiple 6.

Lorsque le moteur tourne et que l'ensemble mécanique décrit un cycle complet depuis l'état de repos jusqu'au retour à l'état de repos, l'état de ces capteurs 41 et 42 évolue comme défini dans le tableau ci-après. A titre d'exemple on admet que le capteur 40 est un disque muni d'une fente hémicirculaire, et lu par deux capteurs à 90° degrés l'un de l'autre. L'écart angulaire entre les points de lecture des cames 31 et 32 est également de 90° environ .

| DESIGNATION | Capteur 41 | Capteur 42 |
|---|---|---|
| Démarrage du moteur à l'état de repos et mise en place du chemin de carte | 0 | 0 |
| Arrivée du chemin de carte en position correcte pour l'introduction de la carte | 0 | →1 |
| Application du connecteur sur la carte | 0 | 1 |
| Fin de l'application du connecteur | →1 | 1 |
| Levée du connecteur | 1 | 1 |
| Fin de la levée du connecteur pour reprise de la carte | 1 | →0 |
| Levée du chemin de carte | 1 | 0 |
| Arrivée en position de repos | →0 | 0 |

0 Etat inactif

1 Etat actif

→ Basculement de l'état du capteur.

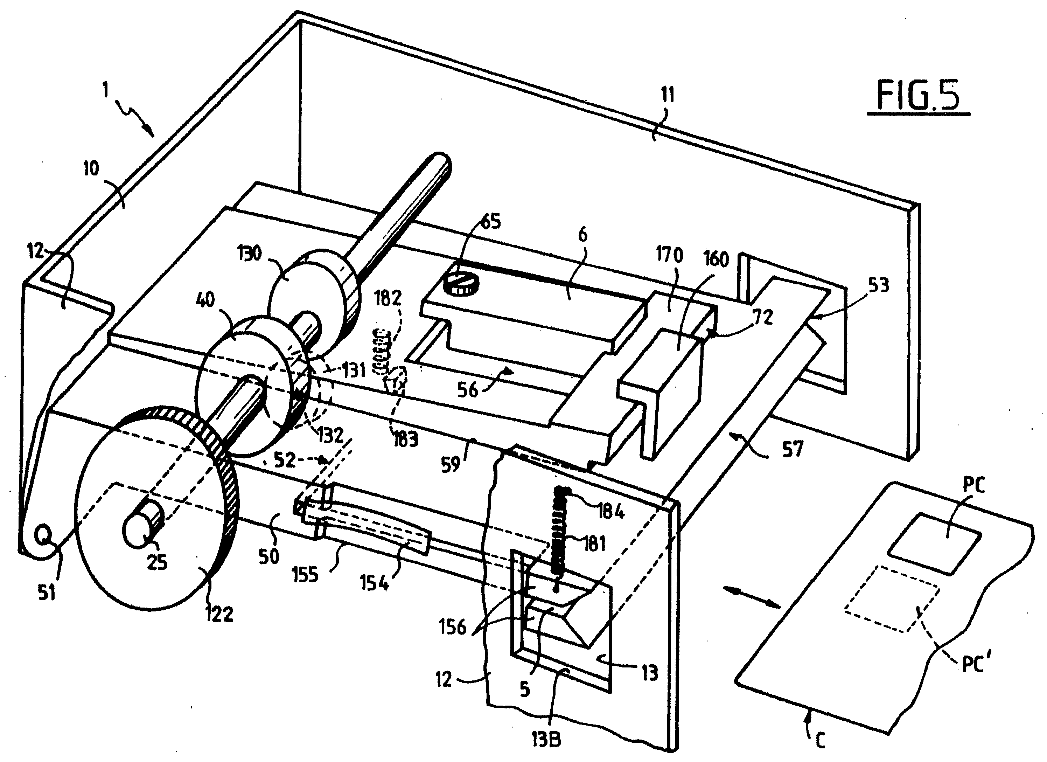

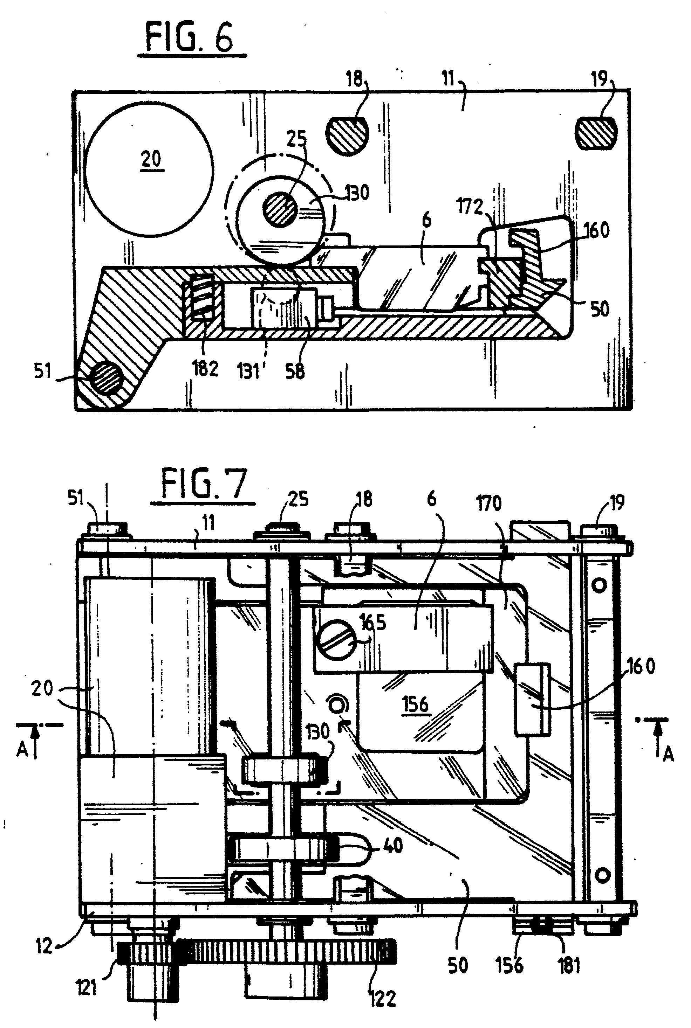

Sur la figure 5, le dispositif selon la variante de l'invention est logé dans un châssis 1 dont on voit ici l'éventuelle paroi de fond 10, la paroi latérale 11 et l'esquisse de la paroi latérale 12, celle-ci apparaissant plus nettement en figure 7. En pratique, le châssis sera simplement constitué des parois latérales 11 et 12, solidarisées par deux entretoises 18, 19 et l'axe de pivotement 51 (figures 6 et 7).

Un moteur ou motoréducteur 20, non représenté sur la figure 5 pour des raisons de clarté, mais figurant sur les figures 6 et 7, est placé à l'arrière du châssis 1, du côté de la paroi 10. Sur son arbre est monté un pignon 121, qui coopère avec un autre pignon 122, monté sur un arbre 25, soutenu par les parois 11 et 12. Ce moteur 20 tourne toujours dans le même sens.

Cet axe reçoit fixement une came 130, ainsi qu'une roue 40 formant codeur angulaire sur au moins quatre positions, à l'aide de détecteurs du genre cellule photoélectrique, coopérant avec des perforations axiales et/ou marquages périphériques du disque 40. Ces cellules sont semblables à celles mentionnées dans le dispositif décrit en référence aux figures 1 à 4 et, pour des raisons de clarté, ne sont pas représentées sur les figures en référence.

La came 130 est un excentrique, comme il apparaît clairement sur les figures 5 et 6. Elle remplace les deux cames 31 et 32 du dispositif décrit en référence aux figures 1 à 4.

Un réceptacle 5 est défini par un alvéole ménagé dans un plateau 50, mobile à pivotement autour d'un axe 51, parallèle à l'axe 25, et situé de préférence au voisinage de la paroi d'extrémité 10. Le plateau 50 présente préférablement un coude, à l'extrémité duquel il est articulé sur l'axe 51.

Le plateau 50 présente un évidement 59 sur sa partie centrale s'étendant sur au moins une demi-largeur de plateau. Dans cet évidement est logé un second plateau 170, présentant également un coude et monté à pivotement sur l'axe 51. Un ressort 182 monté sous le plateau 170, et sur la paroi inférieure du châssis, non référencée, permet de rappeler élastiquement le plateau 170 dans une position de repos dans laquelle ce dernier est sensiblement incliné au-dessus du plateau 50. Une butée 160, montée sur l'avant dans la paroi supérieure du plateau 50, définit la position de repos du plateau 170.

La came 130 coopère avec un galet 131 monté à rotation dans un alvéole percé dans le plateau 170. Le contact est assuré par le rappel élastique vers le haut que définit un ressort 181 monté entre la partie supérieure du plateau 50 et une tige 184 fixée sur la paroi 12 du châssis 1.

L'alvéole qui va servir à la réception d'une carte telle que C comporte un bord de référence 53 et, à l'opposé, un évidement 155. Une lame 54, montée sur le plateau 50, propre à se loger à l'intérieur de cet évidement, permet de rappeler élastiquement la carte vers le bord 53.

Le bord interne rectiligne de l'alvéole, noté 52, est équipé en une position choisie d'un détecteur de présence 58 (Figure 6) d'une carte dans l'alvéole. Ce détecteur a les mêmes fonctions et le même emplacement que le détecteur 58 du dispositif décrit en référence aux figures 1 à 4.

C'est, avantageusement, un micro-interrupteur, associé à une lame de contact sur la carte.

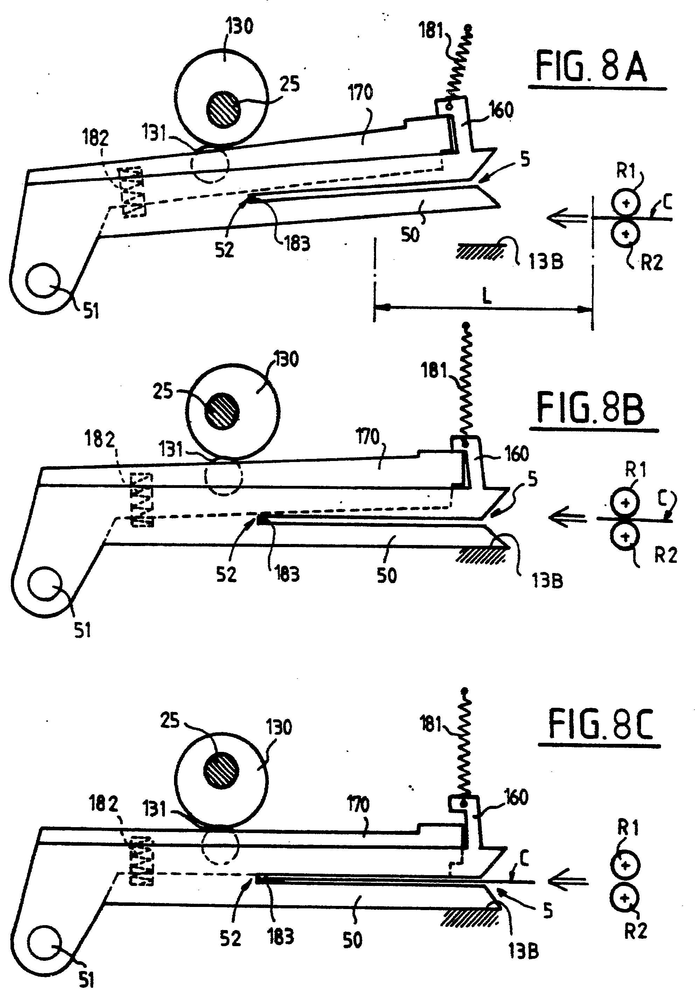

La carte C, munie de plots de connexion PC, peut être amenée manuellement selon un chemin d'amenée défini par tout moyen. En principe, elle est amenée automatiquement à l'aide de rouleaux motorisés schématisés en R1 et R2 (figures 8A à 8C). La position des plots PC est ici la position standard pour les cartes à microcircuits français. Certaines cartes sont équipées de plots en une position un peu différente, schématisée en PC' sur la figure 5.

La paroi supérieure du plateau 50 est percée d'un alvéole 59, qui est de préférence rendu suffisamment grand pour permettre de lire aussi bien la zone PC que la zone PC' de la carte par une simple translation d'un bloc connecteur 6, manuel ou motorisé.

Le plateau 170 est également muni d'une ouverture 156, en regard de l'ouverture 59 percée dans le plateau 50. Dans un mode préférentiel de l'invention, la fenêtre 156 a une largeur inférieure à celle de la fenêtre 159.

Un épaulement 172 parallèle à l'axe 25 est prévu sur le bord extérieur de la fenêtre 156. Il sert de butée dans le mouvement descendant du plateau 170 et définit une position de compression du plateau 170 en appui sur le plateau 50.

Le bloc connecteur 6 est fixé sur le plateau 170. Une fois réglé et disposé en regard des plots du microcircuit des cartes envisagées, il est fixé par exemple par une vis 165 sur le plateau 170. Ce connecteur peut être également fixé d'une autre manière, par exemple à l'aide de barrettes de fixation disposées selon les deux largeurs de l'ouverture 156. Une telle disposition permet un réglage plus aisé du connecteur sur l'ouverture.

La position de repos du plateau 50 est définie par la butée de la partie avancée 156 entre l'évidement 155 et le bord latéral 53 contre le bord inférieur 13B, d'une fenêtre 13 percée dans la paroi 12 du châssis 1. Le ressort 181 rappelle élastiquement cette partie contre le bord supérieur de cette fenêtre.

Sous la paroi inférieure du plateau 170 est également prévue une saillie conique 183 dont la fonction sera décrite ci-après. Cette saillie est située exactement au niveau du bord 52 interne rectiligne de l'alvéole 5. Sa position le long de ce bord peut varier mais, dans un mode préférentiel, cette saillie est située au niveau du milieu de la largeur du plateau 50.

Les figures 6 et 7 complètent la représentation du dispositif selon l'invention, remarque étant faite que le moteur 20 apparaît sur ces figures et que certains détails de réalisation diffèrent par rapport à la figure 5.

Comme dans le dispositif décrit en référence aux figures 1 à 4, l'homme de l'art comprendra que les parties latérales 11 et 12 du dispositif de connexion peuvent recevoir toute forme appropriée permettant l'accouplement de ce dispositif à un lecteur de carte à pistes magnétiques du commerce, et en particulier aux modèles MCT 245 et MCT 345 fabriqués par la société japonaise SANKYO, au modèle CR 51 vendu par la Demanderesse, et au modèle ESD dit multistandard ou MS, également vendu par la Demanderesse. Les rouleaux R1 et R2 sont alors les galets de sortie de tels lecteurs de cartes à pistes magnétiques.

La figure 6, en particulier, laisse clairement apparaître le ressort 182, qui rappelle élastiquement le plateau 170 contre la butée 160. L'excentrique 130 est représenté en position basse, c'est-à-dire comme cela sera décrit plus après, dans la position où à la fois les plateaux 50 et 170 sont en position de compression.

La figure 7 illustre en particulier de quelle façon coopère le moteur 20, situé dans le mode jugé préférentiel, à l'arrière du dispositif, et animant la came 130, à l'aide de la roue dentée 122. Le connecteur est représenté monté sur le plateau 170 du côté de la paroi 11 du châssis 1. C'est en effet la position la plus courante pour les micro-circuits du cadre du commerce actuellement en usage. Le bloc connecteur 6 est semblable à celui décrit dans le dispositif décrit en référence aux figures 1 à 4. Il s'agit encore d'un corps en matière synthétique, muni d'un épaulement de fixation. Sur la face opposée à l'épaulement, le bloc connecteur multiple peut être muni d'une fente en forme de T qui peut faciliter son positionnement.

Les figures 8A, 8B, 8C, auxquelles il sera fait référence maintenant, illustrent de manière simplifiée le fonctionnement du dispositif.

Pour une première position de la came 130, appelée position haute, l'ouverture 57 du réceptacle 5 est située plus haut que le chemin d'amenée de cartes CAC. On dispose alors de toute la longueur L pour permettre le débattement de la carte, lorsqu'elle est lue par le lecteur de piste magnétique, ce qui est très important dans certaines applications. De plus, une carte peut être ainsi mise au rebut, ou sous séquestre dans un bac prévu à cet effet, où elle tombe par gravité. Il suffit pour cela qu'elle soit lâchée par les rouleaux R1 et R2, le dispositif de connexion étant dans sa position de repos sur la figure 8A.

Le galet 131 n'est pas engagé avec l'excentrique 130. Le ressort 181 rappelle élastiquement le plateau 50, qui bute contre le bord supérieur de la fenêtre percée dans le châssis par l'intermédiaire de son épaulement latéral.

Il en est de même du plateau 170, rappelé élastiquement par le ressort 182 contre la butée 160, fixée sur le plateau 50.

Lorsque le dispositif de connexion est activé, la première phase consiste en la descente du plateau 50, de façon que son ouverture 57 vienne en regard du chemin d'amenée de cartes CAC. L'excentrique a pivoté d'un quart de tour dans une position intermédiaire. Il entre alors en contact avec le galet 131, solidaire du plateau 170. Les raideurs des ressorts 181 et 182 sont prévues pour que celle du ressort 181 soit inférieure à celle du ressort 182.

Ainsi, lorsque l'excentrique exerce une pression sur le galet 131, c'est d'abord le plateau 50 qui descend en raison des différentes raideurs des ressorts de rappel 181 et 182. L'ensemble du plateau 50 se déplace donc vers le bas, entraînant avec lui le plateau 170 par l'intermédiaire de la butée 160. Le plateau 170, bien que se déplaçant également vers le bas par rapport au châssis, reste immobile par rapport au plateau 50.

On notera que dans cette position, le connecteur ne vient pas en prise sur les plots de la carte, ce qui permet une introduction de la carte dans son réceptacle 5 avec des frictions minimales. On remarquera aussi qu'à l'issue de la rotation d'un quart de tour de l'excentrique, l'épaulement latéral du plateau 50 bute contre le bord inférieur de la fenêtre percé dans la paroi 12 du châssis. L'ouverture 57 du plateau 50 est alors exactement en regard du chemin d'amenée de la carte CAC.

Sur la figure 8C, la carte est supposée complètement introduite dans le réceptacle. L'excentrique a en effet pivoté d'un autre quart de tour, ce qui l'a amené dans sa position la plus basse. Le plateau 50 étant en butée sur le bord inférieur de la fenêtre 13 du châssis par son épaulement, c'est le plateau 170 qui se déplace sous la pression de l'excentrique sur le galet 131. Le ressort 182 est alors comprimé jusqu'à ce que l'épaulement latéral du plateau 170 bute contre la paroi supérieure du plateau 50. Les contacts du connecteur 6 sont alors venus s'établir sur les plots respectivement associés de la carte, par un mouvement de rotation qui implique une friction, propre à établir un excellent contact. Ce déplacement par rotation est de l'ordre de 2 dixièmes de millimètre.

La saillie conique participe également à une meilleure friction du connecteur contre les plots du microcircuit de la carte. Cette saillie 183, située au niveau du bord interne 52 de l'alvéole 5, induit un déplacement de la carte vers l'extérieur, par suite du mouvement de rotation qu'effectue la saillie solidairement avec le plateau 170. Le déplacement provoqué par cette saillie conique 183 est également de l'ordre de 2 dixièmes de millimètre. Ainsi, la détection de carte par le microinterrupteur reste active. De plus la position de la carte, donc de son connecteur, est très bien définie.

Le déplacement total de friction de la carte contre le connecteur est donc de 4 dixièmes de millimètre et ceci vers l'extérieur. La carte, après avoir été introduite complètement dans le réceptacle 5, sort sensiblement du réceptacle durant sa troisième phase.

Il est alors possible de procéder à des tests sur la bonne qualité des contacts, notamment par contrôle de la conduction entre les bornes d'entrée actives de la carte et le substrat semiconducteur des microcircuits qui comporte celle-ci.

Le moteur reste immobile pendant toute la durée des opérations de lecture/écriture dans les microcircuits de la carte.

Après cela, le moteur est à nouveau mis en action et la came 130 va pivoter d'un autre quart de tour pour atteindre une position comparable à celle de la figure 8B, si ce n'est que l'excentrique se trouve dans une position symétrique par rapport à celle représentée sur la figure 8B. Le connecteur 6 est donc relevé, après quoi les rouleaux R1 et R2 vont retirer la carte.

Le temps nécessaire à l'exécution d'un cycle complet, de la position de repos à la position de repos pour l'ensemble des composants du mécanisme, à savoir le réceptacle et le connecteur, peut être aisément rendu compris entre 1 et 4 secondes, sans consommation électrique excessive.

Par ailleurs, lorsque le dispositif connecteur est dans la disposition du connecteur relevée, après vérification des contacts ou bien lecture/écriture dans la carte, en attente de la relevée du réceptacle, on peut faire en sorte qu'il s'écoule un temps d'au moins 0,3 seconde entre la mise sous tension du moteur et le début du déplacement du réceptacle.

Par ailleurs, comme dans le dispositif décrit en référence aux figures 1 à 4, il est possible de rendre la longueur L (figure 8A) égale à 55 millimètres au moins, ce qui est particulièrement important pour limiter l'encombrement total du lecteur de cartes mixtes.

Les capteurs mentionnés dans le dispositif décrit en référence aux figures 1 à 4 sont encore présents dans le dispositif selon la variante de l'invention. Leur rôle et leur nature étant restés identiques, il n'y a pas lieu ici de les décrire en détail. Il convient cependant de rappeler brièvement que des capteurs sont prévus à l'intérieur du dispositif pour indiquer le positionnement correct de la carte (afin de permettre l'application du connecteur), la position du réceptacle et celle du connecteur multiple 6. L'évolution des états de ces capteurs est identique à celle décrite dans le dispositif en référence aux figures 1 à 4.

La figure 9 illustre maintenant le schéma de principe d'une machine incorporant un dispositif de connexion ou sa variante selon l'invention.

On y retrouve la mécanique de connexion 1, des éléments électroniques associés E1, comprenant la commande du moteur 20, la réception des informations des différents capteurs, et bien entendu des connexions vers le bloc 6.

Par une interface mécanique (non représentée), le dispositif de connexion 1 est mis en coopération par exemple avec un organe tel qu'un lecteur de pistes magnétiques 2, muni de son électronique habituelle E2. Un bac 3 est prévu sous l'espace libre partant du bord gauche du lecteur 2, pour aller largement sous le dispositif de connexion 1. L'organe 2 peut être tout autre dispositif, même un simple introducteur de carte à micro-circuits.

Enfin, des moyens électroniques de gestion EG assurent le bon fonctionnement de l'ensemble, par interaction avec les dispositifs électroniques E1 et E2.

Bien que l'invention trouve ses pleins avantages dans les modes de réalisation décrits ci-dessus, il est envisageable d'y apporter des variantes. On pourrait concevoir par exemple, pour certaines applications, que le bloc connecteur 6 soit fixe. Dans ce cas, les pointes de ses contacts 62 (figure 3A) seraient de préférence dirigées vers la gauche, lorsqu'on regarde la figure 1.

De plus, les modes de réalisation décrits ne sont pas limitatifs. Le moteur 20 pourrait être un moteur synchrone, pas à pas, ou tout type de moteur convenable. Les cames 31 et 32 du dispositif de l'invention ou la came 130 de sa variante peuvent être remplacées par des commandes cinématiques à biellettes ou excentriques. Enfin, les capteurs peuvent détecter directement la position des organes commandés ultimes 50, 70 et 170 ou 6, ou bien sûr, d'organes intermédiaires.

Au niveau de l'application, le dispositif peut, par construction, être adapté à la lecture de plots placés en PC seulement, ou en PC' seulement. Une translation manuelle ou commandée du connecteur 6, le rend capable de lire les deux types de cartes.

**Revendications**

1. Dispositif de connexion avec une carte à micro-circuits, comportant :
- un chemin d'amenée (CAC, R1, R2) de la carte (C),
- des moyens (5) formant réceptacle pour recevoir la carte en position prédéterminée, et
- un connecteur multiple (6) propre à venir en contact sur les plots de connexion (PC, PC') de la carte, lorsqu'elle est dans sa position prédéterminée,
caractérisé en ce que le réceptacle (5), monté pivotant (51), est normalement maintenu (81) dans une position de repos où son ouverture (57) est non alignée sur la sortie du chemin d'amenée de la carte, et en ce qu'il est prévu un organe moteur (20-22, 25, 31) propre, sur commande,à placer ce réceptacle (5) en regard de la sortie du chemin d'amenée.

2. Dispositif selon la revendication 1, caractérisé en ce que, dans la position de repos du réceptacle (5), son ouverture (57) est au-dessus de la sortie du chemin d'amenée.

3. Dispositif selon l'une des revendications 1 et 2, caractérisé en ce que le connecteur (6) monté sur un support (70) mobile à pivotement, vient en contact sur la carte après son introduction dans le réceptacle, à partir d'une position de repos sans contact avec la carte, ce qui permet une très faible force d'insertion de la carte.

4. Dispositif selon la revendication 3, caractérisé en ce qu'il comprend un moteur unique (20), tournant toujours dans le même sens, et commandant à la fois le réceptacle (5) et le connecteur (6).

5. Dispositif selon la revendication 4, caractérisé en ce que le moteur anime deux cames (31, 32), dont l'une (31) assure l'alignement commandé de l'ouverture du réceptacle sur la sortie du chemin d'amenée de cartes, et l'autre (32) assure ensuite la descente du connecteur mobile sur les plots de la carte.

6. Dispositif selon l'une des revendications 3 à 5, caractérisé en ce que le déplacement en rotation du connecteur (6) l'amène avec friction sur les plots de la carte.

7. Dispositif selon l'une des revendications précédentes, caractérisé en ce qu'il comporte également un codeur de position (40) muni de capteurs (41, 42) pour définir logiquement la position du réceptacle et celle du connecteur, respectivement.

8. Dispositif selon l'une des revendications précédentes, caractérisé en ce que le réceptacle (5) définit intérieurement un alvéole rectangulaire possédant latéralement un bord de référence (53) faisant face à un rappel élastique de cadrage (54), et, à l'opposé de son ouverture (57), un détecteur (58) de butée de la carte.

9. Dispositif selon la revendication 8, caractérisé en ce que le détecteur de butée comprend une cellule photo-électrique (58).

10. Dispositif selon l'une des revendications 8 et 9, caractérisé en ce que le détecteur de butée comprend un micro-interrupteur (58).

11. Dispositif selon l'une des revendications précédentes, caractérisé en ce que la ou les positions de repos sont définies par rappel élastique (80, 81, 82).

12. Dispositif selon l'une des revendications précédents, caractérisé en ce que le connecteur (6) est déplaçable parallèlement au plan de la carte (C) pour pouvoir lire différents types de carte.

13. Dispositif de connexion avec une carte à microcircuits, conformément à l'une des revendications 1 à 4 et 6 à 12, comportant :
- un chemin d'amenée (CAC, R1, R2) de la carte (C);
- des moyens (5) formant réceptacle pour recevoir la carte en position déterminée; et
- au moins un connecteur (6) propre à venir en contact sur les plots de connexion de la carte, lorsqu'elle est dans sa position prédéterminée,
dans lequel le réceptacle (5) monté pivotant, est normalement maintenu dans une position de repos où son ouverture (57) est non alignée sur la sortie du chemin d'amenée de la carte et dans lequel il est prévu

un organe moteur (20, 122,25, 130) propre, sur commande, à placer ce réceptacle (5) en regard de la sortie des moyens d'amenée,
caractérisé en ce que
le support du connecteur (170) est solidaire du réceptacle (5) et monté à pivotement sur le même axe que celui du réceptacle (5).

14. Dispositif selon la revendication 13, caractérisé en ce que le support du connecteur (170) est disposé sur la paroi supérieure du réceptacle (5) et comprend une fenêtre (156) dans laquelle est fixé le connecteur (6) qui vient en contact sur la carte située dans le réceptacle (5) lors du pivotement du support du connecteur (170).

15. Dispositif selon l'une des revendications 13 et 14, caractérisé en ce que les positions de repos du réceptacle (5) et du support du collecteur (170) sont définies par rappel élastique, la raideur du dispositif de rappel (182) du support du connecteur étant supérieure à celle du dispositif (181) du rappel du réceptacle.

16. Dispositif selon l'une des revendications 13 à 15, caractérisé en ce que le moteur unique (20) commandant à la fois le réceptacle (5) et le support du connecteur (170) anime une came unique en particulier un excentrique (130) qui assure
- d'une part l'alignement commandé de l'ouverture du réceptacle (5) sur la sortie du chemin d'amenée de cartes, par appui sur un galet (131) monté à pivotement sur le support du collecteur (170) solidaire du réceptacle (5), jusqu'à ce que le réceptacle (5) vienne en butée sur le châssis du dispositif (13);
- d'autre part assure ensuite la descente du connecteur (6) mobile sur les plots de la carte,
l'ordre de ces opérations étant assuré par la différence de raideur des dispositifs de rappel respectifs du réceptacle (181) et du support du connecteur (182).

17. Dispositif selon l'une des revendications 13 à 16, caractérisé en ce que le support du connecteur (170) comprend sur la partie interne du côté de l'alvéole du réceptacle (5) une saillie (183) conique qui, lors du déplacement relatif du support du collecteur (170) vers la carte, entraîne un déplacement relatif de la carte vers l'extérieur par frottement de la saillie (183) contre le bord de la carte situé au fond de l'alvéole (52).

18. Dispositif selon l'une des revendications 13 à 17, caractérisé en ce que le déplacement en rotation du connecteur (6) amène ce dernier avec friction sur les plots de la carte.

19. Dispositif selon l'une des revendications 13 à 18, caractérisé en ce que le déplacement relatif des plots de la carte et du connecteur (6) entraînant une friction sur les plots et un meilleur contact, provient de manière sensiblement égale du déplacement relatif de la carte provoqué par la saillie conique (183) et du déplacement en rotation du connecteur (6).

20. Dispositif selon l'une des revendications 13 à 19, caractérisé en ce que le moteur anime la came (130) par une roue à pignon (122) située sur le même axe (25) que la came (130), à l'extérieur du châssis (1) du dispositif.

21. Dispositif selon l'une des revendications 13 à 20, caractérisé en ce que le support du connecteur (170) est bloqué dans sa position de repos par une butée (160) fixée sur la paroi supérieure du réceptacle (5).

22. Dispositif selon l'une des revendications 13 à 21, caractérisé en ce que le réceptacle (5) comprend sur au moins l'une de ses parois latérales une partie avancée ou saillie qui peut se déplacer à l'intérieur d'une fenêtre (13) percée dans ladite paroi latérale, cette dernière servant de butée aux déplacements ascendants ou descendants du réceptacle (5) et définissant le champ du déplacement du réceptacle (5).

23. Machine de traitement de cartes à micro-circuits, caractérisée en ce qu'elle comprend un dispositif selon l'une des revendications précédentes.

24. Machine selon la revendication 23, caractérisée en ce que le dispositif de connexion (1) est accouplé, par simple adaptation mécanique, à un dispositif de traitement de cartes (2), ce qui est facilité par la faible force d'insertion requise par le dispositif de connexion (1).

## Claims

1. A device for making a connection with an I.C. card, the device comprising:
a card-feed path (CAC, R1, R2);
receptacle-forming means (5) for receiving the card in a predetermined position; and a multi-way connector (6) suitable for making contact with connection tabs (PC, PC') of the card when the card is in its predetermined position;
the device being characterized in that the receptacle (5) is pivotally mounted (51) and is normally maintained (81) in a rest position where its opening (57) is not in alignment with the outlet of the card-feed path, and in that a drive member (20-22, 25, 31) is provided suitable for placing the receptacle (5) on command to face the outlet from the feed path.

2. A device according to claim 1, characterized in that the opening (57) of the receptacle (5) when in its rest position is above the outlet from the feed path.

3. A device according to claim 1 or 2, characterized in that the connector (6) is mounted on a pivoting support (70) and comes into contact with the card after it has been inserted into the receptacle by moving from a rest position where it is not in contact with the card, thereby making it possible to use a very low card-insertion force.

4. A device according to claim 3, characterized in that it includes a single motor (20) which always rotates in the same direction and which controls both the receptacle (5) and the connector (6).

5. A device according to claim 4, characterized in that the motor drives two cams (31, 32), one of which (31) ensures the controlled alignment of the receptacle opening with the outlet of the card-feed path, and the other of which (32) then ensures that the moving connector is lowered onto the contact tabs of the card.

6. A device according to any one of claims 3 to 5, characterized in that the rotary displacement of the connector (6) causes it to rub against the tabs of the card.

7. A device according to any preceding claim, characterized in that it also includes a position encoder (40) provided with respective sensors (41, 42) for logically defining the position of the receptacle and the position of the connector.

8. A device according to any preceding claim, characterized in that the receptacle (5) defines an internal rectangular recess possessing a reference edge (53) on one side facing a resilient centering face (54) and, at its opposite end from its opening (57), a card abutment detector (58).

9. A device according to claim 8, characterized in that the abutment detector comprises a photoelectric cell (58).

10. A device according to claim 8 or 9, characterized in that the abutment detector comprises a microswitch (58).

11. A device according to any preceding claim, characterized in that the rest position(s) is/are defined by resilient bias (80, 81, 82).

12. A device according to any preceding claim, characterized in that the connector (6) is displaceable parallel to the plane of the card (C) in order to be capable of reading different types of card.

13. A device for making a connection with an I.C. card, in accordance with any one of claims 1 to 4 and 6 to 12, and comprising
a card-feed path (CAC, R1, R2);
receptacle-forming means (5) for receiving the card in a determined position; and
at least one connector (6) suitable for coming into contact with connection tabs of the card when the card is in its predetermined position;
in which the receptacle (5) is pivotally mounted, is normally maintained in a rest position where its opening (37) is not aligned with the outlet from the card-feed path; and in which a drive member (20, 122, 25, 120) is provided which is suitable for placing the receptacle (5), on command, to face the outlet from the feed means;
the device being characterized in that:
the connector support (170) is fixed to the receptacle (5) and is mounted to pivot about the same axis as the receptacle (5).

14. A device according to claim 13, characterized in that the connector support (170) is disposed on the top wall of the receptacle (5) and includes a window (156) in which the connector (6) is fixed, which connector makes contact with the card situated inside the receptacle (5) when the connector support (170) pivots.

15. A device according to claim 13 or 14, characterized in that the rest positions of the receptacle (5) and of the connector support (170) are defined by resilient bias, with the stiffness of the connector support return device (182) being greater than that of the receptacle return device (181).

16. A device according to any one of claims 13 to 15, characterized in that the single motor (20) controlling both the receptacle (5) and the connector support (170) drives a single cam, in particular an excentric cam (130) which ensures:
firstly that the opening of the receptacle (5) is brought in controlled manner into aligment with the outlet of the card-feed path by bearing against a wheel (131) pivotally mounted on the connector support (170) which is fixed to the receptacle (5) until the receptacle (5) comes into abutment against the frame of the device (13);
and then secondly that the moving connector (6) is lowered onto the card tabs, with the order of these operations being defined by the difference in the stiffnesses of the respective return devices of the receptacle (181) and of the connector support (182).

17. A device according to any one of claims 13 to 16, characterized in that the connector support (170) includes a conical protection (180) on the internal portion of the side of the recess in the receptacle (5) such that during relative displacement of the connector support (170) towards the card, the conical protection (183) entrains relative displacement of the card towards the outside by rubbing against the edge of the card situated in the bottom of the recess (52).

18. A device according to any one of claims 13 to 17, characterized in that the rotary displacement of the connector (6) causes the connector to rub against the tabs of the card.

19. A device according to any one of claims 13 to 18, characterized in that the relative displacement of the connector (6) and the tabs of the card giving rise to rubbing against the tabs and improved contact stems substantially equally from the relative displacement of the card caused by the conical projection (183) and the rotary displacement of the connector (6).

20. A device according to any one of claims 13 to 19, characterized in that the motor drives the cam (130) by a gear wheel (122) situated on the same axis (25) as the cam (130), outside the frame (1) of the device.

21. A device according to any one of claims 13 to 20, characterized in that the connector support (120) is locked in its rest position by an abutment (160) fixed on the top wall of the receptacle (5).

22. A device according to any one of claims 13 to 21, characterized in that the receptacle (5) includes, on at least one of its side walls, a projecting or proud portion capable of moving inside a window (13) pierced through said side wall, said portion constituting as an abutment for up or down displacements of the receptacle (5) and defining the displacement field of the receptacle (5).

23. A machine for processing I.C. cards, the machine being characterized in that it includes a device according to any preceding claim.

24. A machine according to claim 23, characterized in that the connection device (1) is coupled to a card processing device (2) by mere mechanical fitting, which is facilitated by the low insertion force required by the connection device (1).

## Patentansprüche

1. Einrichtung zum Anschließen einer IC-Karte mit:
– einem Einführungsweg (CAC, R1, R2) für die Karte,
– Vorrichtungen (5), die ein Empfangsteil zum Aufnehmen der Karte in einer vorgegebenen Stellung bilden, und
– einem mehrfachen Verbindungsstück (6), das geeignet ist, mit den Kontaktanschlüssen (PC, PC′) der Karte in Kontakt zu kommen, sobald diese in ihrer vorgegebenen Stellung ist, dadurch gekennzeichnet, daß das Empfangsteil (5), das schwenkbar (51) montiert ist, normalerweise in einer Ruhestellung gehalten wird (81), in der seine Öffnung (57) nicht mit dem Ausgang des Einführwegs der Karte ausgerichtet ist, und daß ein eigenes Motorelement (20–22, 25, 31) vorgesehen ist, um auf Befehl das Empfangsteil (5) gegenüber dem Ausgang des Einführungswegs anzuordnen.

2. Einrichtung nach Anspruch 1, dadurch gekennzeichnet, daß in der Ruhestellung des Empfangsteils (5) seine Öffnung (57) oberhalb des Einführungsweges ist.

3. Einrichtung nach einem der Ansprüche 1 und 2, dadurch gekennzeichnet, daß das Verbindungsstück (6), das auf einem beweglichen, schwenkbaren Träger (70) montiert ist, mit der Karte nach deren Einführung in das Empfangsteil ausgehend von einer kontaktfreien Ruhestellung in Kontakt kommt, was eine sehr geringe Einführungskraft für die Karte ermöglicht.

4. Einrichtung nach Anspruch 3, dadurch gekennzeichnet, daß ein einziger Motor (20), der sich ständig in derselben Richtung dreht, gleichzeitig das Empfangsteil (5) und das Verbindungsstück betreibt.

5. Einrichtung nach Anspruch 4, dadurch gekennzeichnet, daß der Motor zwei Nocken (31, 32) bewegt, von denen die eine (31) die befohlene Ausrichtung der Öffnung des Empfangsteils mit dem Ausgang des Einführungswegs der Karten und die andere (32) anschließend das Herunterbewegen des beweglichen Verbindungsstücks auf die Kontaktanschlüsse der Karte sicherstellt.

6. Einrichtung nach einem der Ansprüche 3 bis 5, dadurch gekennzeichnet, daß die Drehbewegung des Verbindungsstücks (6) dieses mit Reibung auf die Kontaktanschlüsse der Karte bringt.

7. Einrichtung nach einem der vorhergehenden Ansprüche, dadurch gekennzeichnet, daß sie ebenfalls einen Positionskodierer (40) umfaßt, der mit Aufnehmern (41, 42) versehen ist, um logisch die jeweilige Position des Empfangsteils und die des Verbindungsstücks zu bestimmen.

8. Einrichtung nach einem der vorhergehenden Ansprüche, dadurch gekennzeichnet, daß das Empfangsteil (5) im Innern eine rechtwinklige Zelle bildet, die an der Seite einen Bezugsrand (53), der einer elastischen Ausrichtungsspurführung (54) gegenüberliegt, und auf der Gegenseite ihrer Öffnung (57) einen Kartenanschlagsdetektor (58) besitzt.

9. Einrichtung nach Anspruch 8, dadurch gekennzeichnet, daß der Anschlagsdetektor eine photoelektrische Zelle (58) umfaßt.

10. Einrichtung nach einem der Ansprüche 8 und 9, dadurch gekennzeichnet, daß der Anschlagsdetektor einen Mikroschalter (58) umfaßt.

11. Einrichtung nach einem der vorhergehenden Ansprüche, dadurch gekennzeichnet, daß die Ruheposition oder -positionen durch die elastische Spurführung (80, 81, 82) gebildet werden.

12. Einrichtung nach einem der vorhergehenden Ansprüche, dadurch gekennzeichnet, daß das Verbindungsstück (6) parallel zur Ebene der Karte (C) beweglich ist, um verschiedene Kartenarten lesen zu können.

13. Einrichtung zum Anschließen einer IC-Karte nach einem der Ansprüche 1 bis 4 und 6 bis 12 mit:
– einem Einführungsweg (CAC, R1, R2) für die Karte,
– Vorrichtungen (5), die ein Empfangsteil zum Aufnehmen der Karte in einer vorgegebenen Stellung bilden, und
– einem mehrfachen Verbindungsstück (6), das geeignet ist, mit den Kontaktanschlüssen (PC, PC′) der Karte in Kontakt zu kommen, sobald diese in ihrer vorgesehenen Stellung ist,
in der das Empfangsteil (5), das schwenkbar (51) montiert ist, normalerweise in einer Ruhestellung gehalten wird (81), in der seine Öffnung (57) nicht mit dem Ausgang des Einführungswegs der Karte ausgerichtet ist, und in der ein eigenes Motorelement (20–22, 25, 31) vorgesehen ist, um auf Befehl das Empfangsteil (5) gegenüber dem Ausgang des Einführungswegs anzuordnen, dadurch gekennzeichnet, daß der Träger des Verbindungsstücks (170) mit dem Empfangteil (5) fest verbunden ist und schwenkbar auf der gleichen Achse wie das Empfangteil (5) montiert ist.

14. Einrichtung nach Anspruch 13, dadurch gekennzeichnet, daß der Träger des Verbindungsstücks (170) auf der oberen Wand des Empfangteils (5) angeordnet ist und ein Fenster (156) umfaßt, in dem das Verbindungsstück (6) befestigt ist, das mit der in dem Empfangteil (5) befindliche Karte während des Schwenkvorgangs des Trägers des Verbindungsstücks (170) in Kontakt kommt.

15. Einrichtung nach einem der Anspruch 13 und 14, dadurch gekennzeichnet, daß die Ruhestellungen des Empfangsteils (5) und des Trägers des Verbindungsstücks (170) durch eine elastische Führung gebildet werden, wobei die Steifigkeit der Führungsvorrichtung (182) des Trägers des Verbindungsstücks höher ist als die der Führungsvorrichtung (181) des Empfangsteils.

16. Einrichtung nach einem der Ansprüche 13 bis 15, dadurch gekennzeichnet, daß der einzige Motor (20), der zugleich das Empfangsteil (5) und den Träger des Verbindungsstücks (170) betreibt, eine einzige Nocke, insbesondere eine exzentrische (130), bewegt, die sicherstellt:
   – einerseits die befohlene Ausrichtung der Öffnung des Empfangsteils (5) mit dem Ausgang des Einführungswegs der Karten durch das Stützen einer schwenkbar an dem mit dem Empfangsteil (5) verbundenen Träger des Verbindungsstücks (170) montierten Rolle (131), bis der Empfangsteil (5) auf dem Rahmen der Einrichtung (13) zum Anschlag kommt;
   – andererseits das anschließende Absenken des beweglichen Verbindungsstücks (6) auf die Kontaktanschlüsse,
wobei diese Operationen durch den Steifigkeitsunterschied der jeweiligen Führungsvorrichtungen des Empfangsteils (181) und des Trägers des Verbindungsstücks (182) sichergestellt werden.

17. Einrichtung nach einem der Ansprüche 13 bis 16, dadurch gekennzeichnet, daß der Träger des Verbindungsstücks (170) auf dem inneren Teil der Zelle des Empfangsteils (5) einen konischen Vorsprung (183) aufweist, der bei der relativen Bewegung des Trägers des Verbindungsstücks (170) zur Karte eine relative Bewegung der Karte nach außen durch Reibung des Vorsprungs (183) gegen den am Ende der Zelle (52) befindlichen Rand der Karte bewirkt.

18. Einrichtung nach einem der Ansprüche 13 bis 17, dadurch gekennzeichnet, daß die Drehbewegung des Verbindungsstücks (6) letzteres mit Reibung auf die Kontaktanschlüsse bringt.

19. Einrichtung nach einem der Ansprüche 13 bis 18, dadurch gekennzeichnet, daß die relative Bewegung der Kontaktanschlüsse der Karte und des Verbindungsstücks (6), die eine Reibung auf den Kontaktanschlüssen und einen besseren Kontakt bewirken, in etwa gleicher Weise auf der relativen Bewegung der Karte, die durch den konischen Vorsprung (183) erzeugt wird, und auf der Drehbewegung des Verbindungsstücks (6) beruht.

20. Einrichtung nach einem der Ansprüche 13 bis 19, dadurch gekennzeichnet, daß der Motor die Nocke (130) durch ein Ritzel (122), das sich auf derselben Achse wie die Nocke (130) außerhalb des Rahmens (1) der Einrichtung befindet, antreibt.

21. Einrichtung nach einem der Ansprüche 13 bis 20, dadurch gekennzeichnet, daß der Träger des Verbindungsstücks (170) in seiner Ruheposition durch einen auf der oberen Wand des Empfangsteils (5) befestigten Anschlag (160) blockiert wird.

22. Einrichtung nach einem der Ansprüche 13 bis 21, dadurch gekennzeichnet, daß das Empfangsteil (5) auf wenigstens einer seiner Seitenwände ein vorstehendes Teil oder einen Vorsprung aufweist, der sich in das Innere eines in diese Seitenwand gebrochenen Fensters (13) bewegen kann, wobei letztere als Anschlag für die aufsteigenden und niedergehenden Bewegungen des Empfangsteils (5) dient und das Bewegungsfeld des Empfangsteils (5) bildet.

23. Maschine zum Behandeln einer IC-Karte, dadurch gekennzeichnet, daß sie eine Einrichtung nach einem der vorhergehenden Ansprüche umfaßt.

24. Maschine nach Anspruch 23, dadurch gekennzeichnet, daß die Verbindungseinrichtung (1) durch einfache mechanische Anpassung mit einer Vorrichtung zum Behandeln von Karten (2) verbunden ist, was durch die geringe Einführungskraft, die für die Verbindungseinrichtung erforderlich ist, erleichtert wird.

# FIG. 1

EP 0 235 022 B1

FIG. 2

FIG. 3B

FIG. 3C

FIG. 3A

FIG. 4A

FIG. 4B

FIG. 4C

| ELECTRONIQUE DE GESTION | |
|---|---|
| ELECTRONIQUE | ELECTRONIQUE |
| DISPOSITIF ELECTRO-MECANI- -QUE DE CONNEXION | LECTEUR DE PISTES MAGNETIQUES |

FIG. 9

FIG.5

1

10

11

12

130

40

65

6

170

160

53

72

182

131

56

183

132

59

57

52

50

155

154

184

181

25

51

122

156

13

12

5

13B

PC

PC'

C

EP 0 235 022 B1

## FIG. 6

## FIG. 7

FIG. 8 A

FIG.8B

FIG.8C